# EUROPEAN PATENT SPECIFICATION

(11) **EP 1 497 344 B1**
(45) Date of publication and mention of the grant of the patent: **14.06.2006**
(21) Application number: 03721161.2
(22) Date of filing: 24.04.2003
(51) Int. Cl.: C08F 212/12, C08G 61/02

(54) **IMPROVED MODIFIERS FOR COATINGS, ADHESIVES OR SEALANTS**
VERBESSERTES MODIFIZIERMITTEL FÜR BESCHICHTUNGEN, KLEBSTOFFE ODER DICHTSTOFFE
ADDITIFS AMELIORES POUR REVETEMENTS, ADHESIFS OU PRODUITS D'ETANCHEITE

(30) Priority: 25.04.2002 EP 02076654
(43) Date of publication of application: 19.01.2005
(73) Proprietor: Neville Chemical Europe B.V., 1422 XX Uithoorn (NL)
(72) Inventor: VAN DER MEIJ, Hendrikus, Cornelis, NL-1422 XX Uithoorn (NL); BOSMAN, Mark, NL-1422 XX Uithoorn (NL); HIRT, Johannes, NL-1422 XX Uithoorn (NL); KOOIJMANS, Petrus, Gerardus, NL-1422 XX Uithoorn (NL)
(74) Representative: Winckels, Johannes Hubertus F.
(86) International application number: PCT/NL2003/000305
(87) International publication number: WO 2003/091298

(56) References cited:
- EP-A- 0 025 241
- EP-A- 0 070 579
- EP-A- 0 190 868

## Description

The invention relates to improved modifiers for coating applications and non-coating applications such as adhesives, sealants, ink and flooring or composite compositions etc. and more in particular to modifiers for coatings based on thermoplastic resin binder systems or thermo hardening resin and curing agent binder systems, such as those based on epoxy resin, alkyd resin, polyester resin, polyurethane resin or acrylic resin, together with a curing or cross linking agent.

Said modifiers were for several years prepared from phenol and C9/C10 hydrocarbons and were in particular applied in coating compositions, based on binders, comprising epoxy resins and curing agents. Originally said modifiers were based on phenol and hydrocarbons having 9 and/or 10 carbon atoms.

Typical examples thereof are NOVARES LA 300, 500, 700, 1000 (available from Rütgers VFT AG, Duisburg, Germany).

The main disadvantage of said conventional modifiers are the relatively low OH functionality (0.2-0.5) and the dark color.

Hydrocarbon resin modifiers, principally suitable for white and/or light colored paint systems, have been developed by using as starting feedstock pure monomers, such as a-methyl styrene, instead of C9/C10 monomers.

Typical examples of such resins are NECIRES EPX LT/LC (from Nevcin Polymers BV, Uithoorn, the Netherlands).

Compared to the phenol/C9/C10 resins, the resins in question exhibit a much better color (1-2 Gardner) and color stability, however, said resin exhibits a high tendency to crystallize.

Especially resins having a hydroxyl functionality of >0.5 exhibit a high tendency to crystallize.

Resins of aromatic/aliphatic nature, such as NEVOXY/Necires EPX-L, L2, L5, LH (Neville Chemical Company, Pittsburgh, USA/ /Nevcin Polymers BV, Uithoorn, the Netherlands), are light colored (1-2 Gardner), exhibit good color stability and a low tendency to crystallize.

The main disadvantage of said resins is the relatively low hydroxyl functionality (0.2-0.5).

Higher hydroxyl functional resins of this type are not very attractive in view of the relatively high level of aliphatic content required to impart good storage stability.

As a result of the latter the use of such resins led to coatings being too low in hardness.

Aromatic resins obtained by using o-cresol instead of phenol in combination with alpha methyl styrene as raw materials like NOVARES LX-200 (Rütgers VFT) have the advantages of a somewhat higher OH functionality (0.5-0.6).

Disadvantages of said resin are poor color and objectionably unpleasant odor.

Aromatic resin modifiers derived from phenol and styrene like NOVARES LS-500 (Rütgers VFT) possess a high hydroxyl functional (0.9-1.0).

A disadvantage of said resins are poor, unpleasant odor and the toxicological characteristics of styrene.

In particular, in the modifier compositions derived from phenol, a-methyl styrene (AMS) and a dimer of isobutylene, alkylated phenol constituents could be in the final compositions which would result from the reaction of one mole phenol, one mole AMS and one mole of dimer, and of one mole phenol and one mole dimer respectively.

The alkylated phenols are regulated in some countries and are objectionable in others.

Regulations regarding alkylated phenols are expected to increase world- wide.

It will be appreciated by persons skilled in the art, that during the last decade the actual function of the modifiers to be applied in coating, ink, adhesive, sealant etc. compositions have been gradually changed from one of cost reduction of the final composition together with improvement of certain performance properties into meeting the present low Volatile Organic Compounds (VOC) regulations with improvement of certain performance properties.

Due to the increasing pressure from health and environmental authorities in most of the industrialized countries and the increasing economical pressure for low cost modifiers there is still an increasing need to provide further improved modifiers, which can meet the presently required combination of properties, i.e. light color, no odor or only low odor, sufficient reactivity in the final applications e.g. coating composition, low tendency to crystallize during storage, an attractively low viscosity, i.e. <20.000 mPa.s at 25°C, the absence of (potentially) toxic reaction products in the final modifier compositions, and less organic solvent in the final coating, adhesive or sealant etc. composition.

Therefore an object of the present invention is to provide said improved modifiers.

Said modifier compositions aimed at must show good compatibility /mix-ability with all applied types of resin binder materials (epoxy, alkyl, polyester, acrylics, polyurethane and thermoplastics) in the e.g. coating compositions etc., must show good viscosity reduction, high dissolving/dilution power, must facilitate pigment wetting in the coating composition etc. and later on a good substrate wetting when the coating composition is applied.

In addition said modifier compositions aimed at must enhance the cure speed of the binder system of the coating composition etc., must enable a sufficiently high shelf life of the coating composition etc., must provide a good balance of flexibility/hardness of the final cured film, must not deteriorate and preferably even enhance the adhesion and/or corrosion resistance of the coating composition etc., and must enhance the flow out of the coating composition etc.

Another objective of the present invention is to provide high performance coating and non-coating compositions comprising said improved modifiers, binders, pigments, fillers and optional other auxiliaries and optionally small amounts of solvents (i.e. less than 5 wt%, relative to the complete compositions) and more preferably no solvent at all.

Still another objective of the present invention is to provide shaped articles, on the surfaces of which said coating composition and no-coating composition such as, adhesive, sealant, ink, flooring and composite compositions have been applied in uncured or cured state.

As result of extensive research and experimentation said improved modifiers aimed at have now been surprisingly found.

Accordingly the invention relates to low odor modifier composition for coating or non-coating applications, which have been derived from pure feedstock comprising phenol, a-methyl styrene (AMS) and vinyl toluene (VT), and which show a sufficient storage stability in combination with an attractive low viscosity.

It will be appreciated that ortho vinyl toluene, para vinyl toluene, and meta vinyl toluene or mixtures thereof can be used as the vinyl toluene constituent without other accompanying chemicals.

According to a preferred embodiment of the low odor modifier compositions of the present invention substantially pure para-vinyl-toluene is included, which has found to provide improved color to the modifiers and compatibility in the end-use compositions.

Preferably the low odor modifier composition of the present invention comprises phenol in a weight proportion of from 0.1 to 40 wt%, a-methyl styrene in a weight proportion of from 30 to 90 wt%, and vinyl toluene in a weight proportion from 0.1 to 36 wt%, wherein all specified weight proportions are relative to the weight of the complete modifier composition and the sum of the three proportions will always be 100%.

Still more preferably said respective weight proportions of phenol, a-methyl styrene and vinyl toluene are in the ranges of from 9 to 23 wt%, from 60 to 80 wt% and from 1 to 30 wt % respectively.

Preferred mutual molar ratios of phenol and vinyl toluene are in the range of from 1: 0.2 to 1: 0.80 and most preferred ratios are in the range of from 1: 0.28 to 1: 0.60.

Preferred mutual molar ratios of phenol and a-methyl styrene are in the range of from 1:0.50 to 1:8.0 and most preferred ratios are in the range of from 1: 0.80 to 1:6.0.

It will be appreciated that the improved low odor modifier compositions of the present invention have been found to be characterized by the presence of only detectable amounts of generally recognized non-toxic and storage stable components.

This could surprisingly be reached by the replacement of part of the originally applied a-metliyl styrene by a well defined, rather pure chemical constituent which is free of other normally accompanying organic compounds, which contain 9 or 10 carbon atoms.

The modifier compositions of the present invention can be further characterized by a dynamic viscosity at 25°C in the range of from 100 to 3000 mPa.s and preferably from 100 to 2000 mPa.s, a Gardner color value <4 and preferably ≤2, an hydroxyl value of from 0.1 to 7.0 wt % and preferably from 1.5 to 6.5 wt%, and a functionality in the range of from 0.05 to 1.0 and preferably from 0.2 to 0.8.

It has been surprisingly found now that the replacement of a-methyl styrene (AMS) by vinyl toluene (partly or completely) can provide low odor modifier compositions, containing a relatively high content of phenol and showing an excellent storage stability, i.e. showing no crystallization after storage for 6 months or longer at 25°C, while an attractive viscosity of the modifier composition appeared to be reached when an excess of AMS is used compared to vinyl toluene (Phenol/ VT resin has a high viscosity & Example E table 2).

Moreover, said modifier compositions have been found to provide a significantly enhanced solubility in non-aromatic solvents, e.g. in isopropyl alcohol.

It will be appreciated that another aspect of the invention is formed by high performance coating composition and non-coating compositions, comprising at least one of the herein before specified improved modifiers together with a binder and optionally pigments, fillers and other auxiliaries, and as far as necessary small amounts of organic solvents (i.e. less than 5 wt% relative to the weight of the complete composition).

The binder in said composition can be based on an alkyd resin, polyester resin epoxy resin together with a curing agent, polyurethane resin, acrylic resin, thermoplastic resin.

A further aspect of the present invention is formed by shaped articles, on the surface of which said coating, adhesive, ink, sealant flooring or composite compositions have been applied, or shaped articles derived from the flooring or composite compositions, in uncured state or cured state.

The modifier compositions of the present invention can be prepared by mixing and reacting the hereinbefore specified respective ingredients in any sequence into an inert organic solvent such as xylene, toluene and using an acid catalyst.

However the more preferred preparation process comprises mixing and substantially complete reaction of the phenol and vinyl toluene constituent, of which the latter is gradually and slowly added to phenol dissolved in organic solvent, before AMS is slowly and gradually added to the reaction mixture, followed by further reaction.

Resins made by the preferred method have shown somewhat better storage stability compared to those not prepared by the preferred method.

It will be appreciated that said preferred manufacturing process forms another aspect of the present invention.

Therefore the invention also relates to a process for the manufacturing of the hereinbefore specified modifier compositions, comprising mixing phenol with an organic solvent, in a weight ratio of from 30:70 to 40:60 and a catalyst, e.g. a Lewis acid catalyst and more preferably BF3 Etherate, in an amount of from 0.01 to 0.2 wt%, at a temperature of from 40 to 60°C, followed by a slow and gradual addition of a predetermined amount of vinyl toluene to the obtained solution over a period of from 0.25 to 0.75 hr under vigorous stirring, followed by an additional reaction period of about 0.5 hours.

Then AMS is added gradually and slowly to the reaction mixture over a period of from 3 to 5 hrs, and after complete addition, an additional reaction time of from 0.25 to 0.75 hrs, neutralizing and filtering the reaction mixture and removal of the organic solvent, occurring in the final reaction mixture in a weight proportion of from 10 to 25 wt%, relative to the weight of the complete reaction mixture.

The invention is illustrated by the following examples, however without restricting its scope to these embodiments.

### Examples 1-5

### Example 1

### (General preparation procedure composition I in table I)

Phenol (8.8 g) and xylene (14.8 g) were charged in a round bottom glass reactor, equipped with condenser, stirrer, and temperature control.

The mixture was heated to 50 0C and after homogenizing 0.05 % w/w BF3 catalyst was added.

After homogenizing a pre-prepared mixture of VT (3.1 g) and AMS (88.1) was added gradually and slowly to the reaction mixture in about 4 hours time.

After complete addition the mixture was allowed to react for another 0.5 hours.

Then the mixture was neutralized and filtered. After solvent removal the product was analyzed.

| | |
|---|---|
| Phenolic hydroxyl content : | 1.5 wt % |
| Viscosity, Brookfield 25 0C : | 125 mPa.s |
| Color, Gardner : | 1 |

### Example 2

### (Preferred method composition I in table I)

Phenol (8.8 g) and xylene (14.8 g) were charged in a round bottom glass reactor, equipped with condenser, stirrer, and temperature control.

The mixture was heated to 50 0C and after homogenizing 0.05 % w/w BF3 catalyst was added.

After homogenizing VT (3.1 g) was added gradually and slowly to the reaction mixture in about 0.5 hours time.

After complete addition the mixture was allowed to react for another 0.5 hours.

Then AMS (88.1) was added gradually and slowly to the reaction mixture in about 4.0 hours time.

After complete addition the mixture was allowed to react for another 0.5 hours.

Then the mixture was neutralized and filtered. After solvent removal the product was analyzed.

| | |
|---|---|
| Phenolic hydroxyl content : | 1.5 wt % |
| Viscosity, Brookfield 25 0C : | 125 mPa.s |
| Color, Gardner : | 1 |

### Example 3

### (General preparation procedure for composition V in table I)

Phenol (8.8 g) and xylene (14.8 g) were charged in a round bottom glass reactor, equipped with condenser, stirrer, and temperature control.

The mixture was heated to 50 0C and after homogenizing 0.08 % w/w BF3 catalyst was added.

After homogenizing a pre-prepared mixture of VT (5.5 g) and AMS (24.0) was added gradually and slowly to the reaction mixture in about 3 hours time.

After complete addition the mixture was allowed to react for another 0.5 hours.

Then the mixture was neutralized and filtered. After solvent removal the product was analyzed.

| | |
|---|---|
| Phenolic hydroxyl content : | 4.2 wt % |
| Viscosity, Brookfield 25 0C : | 500 mPa.s |
| Color, Gardner | : 1-2 |

### Example 4

### (Preferred method for composition V in table I)

Phenol (8.8 g) and xylene (14.8 g) were charged in a round bottom glass reactor, equipped with condenser, stirrer, and temperature control.

The mixture was heated to 50 0C and after homogenizing 0.08 % w/w BF3 catalyst was added.

After homogenizing VT (5.5 g) was added gradually and slowly to the reaction mixture in about 0.75 hours time.

After complete addition the mixture was allowed to react for another 0.5 hours.

Then AMS (24.1) was added gradually and slowly to the reaction mixture in about 2.5 hours time.

After complete addition the mixture was allowed to react for another 0.5 hours.

Then the mixture was neutralized and filtered. After solvent removal the product was analyzed.

| | |
|---|---|
| Phenolic hydroxyl content : | 4.2 wt % |
| Viscosity, Brookfield 25 0C : | 500 mPa.s |
| Color, Gardner | : 1-2 |

### Example 5

Modifier compositions of the present inventions (I-VII, table I and comparative compositions C and D (Table II) were prepared in one kg batches as described in Examples 2 and 4 and as specified in the Table I and II.

The composition is analyzed for viscosity, color, hydroxyl value, hydroxyl content, functionality, and storage stability.

The results are listed in Table I (Examples I-VII) and Table II (Comparative compositions C and D). In the comparative modifier compositions A and B were prepared from phenol and AMS only.

The specific data and the results are listed in Table II (Comparative compositions A and B).

**Table I Composition and characteristics phenoI/VT/AMS modifiers according to the present invention.**

| Example | I | | | II | | III | | IV | | V | | VI | VII |
|---|---|---|---|---|---|---|---|---|---|---|---|---|---|
| Composition .(g) | | | | | | | | | | | | | |
| Phenol | 8.8 | | | 8.8 | | 8.8 | | 8.8 | | 8.8 | | 8.8 | 8.8 |
| VT | 3.1 | | | 3.1 | | 3.1 | | 4.8 | | 5.5 | | 5.9 | 6.1 |
| AMS 88.1 | | | 43.5 | | 26.6 | | 41.8 | | 24.0 | | 14.6 | | 8.8 |
| Composition details | | | | | | | | | | | | | |
| Phenol (%w) | | 8.8 | | 15.9 | | 22.9 | | 15.9 | | 23.0 | | 30.0 | 37.1 |
| VT* (%w) | | 3.1 | | 5.5 | | 8.0 | | 8.8 | | 14.4 | | 20.0 | 25.7 |
| AMS (%w) | 88.1 | | 78.6 | | 69.1 | | 75.3 | | 62.6 | | 50.0 | 37.2 | |
| Phenol:VT:AMS (molar ratio) | 1:0.28:7.96 | | 1:0.28:3.95 | | 1:0.28:2.41 | | 1: 0.44:3.78 | | | 1:0.50:2.2 | | 1:0.53:1.32 | 1:0.55:0.80 |
| Hydroxyl -value (%w) | 1.6 | | | 2.9 | | 4.2 | | 2.9 | | 4.2 | | 5.4 | 6.7 |
| functionality | (0.2) | | | (0.4) | | (0.6) | | (0.4) | | (0.6) | | (0.8) | (1.0) |
| Performance properties | | | | | | | | | | | | | |
| Storage stability | good | | | good | | good | | good | | good | | good | good |
| Gardner color | 1-2 | | | 1-2 | | 1-3 | | 1-2 | | 1-3 | | 2-4 | 2-4 |
| Solubility in IPA | good | | | good | | good | | good | | good | | good | good |
| Viscosity **25°C in mPa.s | 125 | | | 150 | | 600 | | 150 | | 500 | | 1000 | 2000 |

| | | | | | | | | | | | | | |
|---|---|---|---|---|---|---|---|---|---|---|---|---|---|
| * If para vinyl toluene is used instead of a technical mixture of the three VT monomers, the Gardner color will always be 1-2 | | | | | | | | | | | | | |
| ** ASTM-D-1544 | | | | | | | | | | | | | |

**Table II Comparative Examples**

| Comp.example | | | A | | B | C | D | E |
|---|---|---|---|---|---|---|---|---|
| Composition (g) | | | | | | | | |
| Phenol | | 8.8 | | 8.8 | 8.8 | 8.8 | 8.8 | |
| VT | | 0.0 | | 0.0 | 3.1 | 3.1 | 16.1 | |
| AMS | | 78.3 | | 36.8 | 17.5 | 11.9 | 0.0 | |
| Composition details | | | | | | | | |
| Phenol (%wt) | | | 10.1 | | 19.3 | 30.0 | 37.0 | 35.4 |
| VT (%wt) | | | 0.0 | | 0.0 | 10.4 | 12.8 | 64.7 |
| AMS (%wt) | | | 89.9 | | 62.6 | 59.6 | 50.2 | 0.0 |
| Phenol:VT:AMS | (molar ratio) | | 1.0:0.0:7.08 | | 1.0:0.0:3.3 | 1.0:0.28:1.58 | 1.0:0.28:1.08 | 1.0:1.46:0.0 |
| Hydroxyl | - value(%w) | | 1.8 | | 3.5 | 5.4 | 6.7 | 6.4 |
| | functionality | | (0.3) | | (0.5) | (0.8) | (1.0) | (0.95) |
| Performance properties | | | | | | | | |
| Storage stability | | | moderate/poor | | poor | poor | very poor | good |
| Gardner Color | | | 1-2 | | 1-2 | 1-3 | 1-3 | 4-6 |
| *Viscosity Brookfield mPa.s 25 C | | | 900 | | 1500 | - | - | 20.000 |
| Solubility in IPA in 50% solution | | | poor(haze solution) | | poor(haze solution) | good | good | good |

| | | | | | | | | |
|---|---|---|---|---|---|---|---|---|
| * ASTM-D-1544 | | | | | | | | |

## Claims

1. Low odor modifier compositions for coating or non-coating applications, which have been derived from pure feedstock, comprising phenol, a-methyl styrene and ortho-, meta or para- vinyl toluene or mixtures thereof and which show a sufficient storage stability in combination with an attractive low viscosity.

2. Modifier composition according to claim 1, which comprise phenol in a weight proportion of from 0.1 to 40 wt%, a-methyl styrene in a weight proportion of from 30 to 90 wt%, and vinyl toluene in a weight proportion of from 0.1 to 36 wt%, wherein all specified weight proportions are relative to the weight of the complete modifier composition and the sum of the three proportions will always be 100%.

3. Modifier composition according to claim 2, wherein the weight proportions of phenol, a-methyl styrene and vinyl toluene are in the ranges of from 9 to 23 wt %, from 60 to 80 wt% and from 1 to 30 wt % respectively.

4. Modifier composition according to claim 1, wherein the mutual molar ratios of phenol and vinyl toluene are in the range of from 1: 0.20 to 1: 0.80.

5. Modifier composition according to claim 4, wherein the mutual molar ratios of phenol and vinyl toluene are in the range of from 1: 0.28 to 1: 0.60.

6. Modifier composition according to claim 1, wherein the mutual molar ratios of phenol and a-methyl styrene are in the range of from 1: 0.50 to 1: 8.0.

7. Modifier composition according to claim 6, wherein the mutual molar ratios of phenol and a-methyl styrene are in the range of from 1: 3.2 to 1: 8.0.

8. Modifier composition according to claim 1, **characterized by** a dynamic viscosity at 25°C in the range of from 100 to 2000 mPa.s, a Gardner color value <4 , an hydroxyl value of 0.1 to 7.0 and a functionality in the range of from 0.05 to 1.0.

9. Modifier composition according to claim 8, **characterized by** a dynamic viscosity at 25°C in the range of from 100 to 2000 mPa.s, a Gardner color value <2, an hydroxyl value of 1.5 to 6.5 and a functionality 0.2 to 0.8.

10. High performance coating or non coating compositions, comprising at least one of the modifier compositions of claims 1-9, together with a binder and optionally pigments, fillers and auxiliaries and if necessary small amounts of organic solvents (less than 5 wt%, relative to the weight of the complete composition).

11. Shaped articles, bearing on their surface a coating composition of claim 10, in uncured or cured state, or shaped articles derived from the flooring or composite compositions of claim 10, in uncured or cured state.

12. A process for the manufacturing of the here in before specified modifier compositions, comprising mixing phenol with an organic solvent, in a weight ratio of from 30:70 to 40:60 and a acid catalyst, e.g. a Lewis acid catalyst, in an amount of from 0.01 to 0.2 wt%, at a temperature of from 40 to 60°C, followed by a slow and gradual addition of a predetermined amount of methyl styrene to the obtained solution over a period of from 0.25 to 0.75 hr under vigorous stirring, followed by an additional reaction period of from 3 to 5 hrs, and after complete addition, an additional reaction time of from 0.25 to 0.75 hrs, neutralizing and filtering the reaction mixture and removal of the organic solvent by distillation.

## Patentansprüche

1. Geruchsreduzierte Modlfikatorzusammensetzungen für Beschichtungs- oder Nichtbeschichtungsanwendungen, die von reinem Einsatzmaterial abgeleitet sind, das Phenol, α-Methylstyrol und ortho-, meta- oder para-Vinyltoluol oder Gemische davon umfasst, und die eine ausreichende Lagerbeständigkeit in Kombination mit einer attraktiven niedrigen Viskosität zeigen.

2. Modifikatorzusammensetzung gemäß Anspruch 1, die Phenol in einem Gewichtsanteil von 0,1 bis 40 Gew.-%, α-Methylstyrol in einem Gewichtsanteil von 30 bis 90 Gew.-% und Vinyltoluol in einem Gewichtsanteil von 0,1 bis 36 Gew.-% umfasst, wobei alle angegebenen Gewichtsanteile auf das Gewicht der vollständigen Modifikatorzusammensetzung bezogen sind und die Summe der drei Anteile stets 100% beträgt.

3. Modifikatorzusammensetzung gemäß Anspruch 2, wobei die Gewichtsanteile von Phenol, α-Methylstyrol und Vinyltoluol im Bereich von 9 bis 23 Gew.-%, 60 bis 80 Gew.-% bzw. 1 bis 30 Gew.-% liegen.

4. Modifikatorzusammensetzung gemäß Anspruch 1, wobei die Stoffmengenverhältnisse von Phenol zu Vinyltoluol im Bereich von 1:0,20 bis 1:0,80 liegen.

5. Modifikatorzusammensetzung gemäß Anspruch 4, wobei die Stoffmengenverhältnisse von Phenol zu Vinyltoluol im Bereich von 1:0,28 bis 1:0,60 liegen.

6. Modifikatorzusammensetzung gemäß Anspruch 1, wobei die Stoffmengenverhältnisse von Phenol zu α-Methylstyrol im Bereich von 1:0,50 bis 1:8,0 liegen,

7. Modlfikatorzusammensetzung gemäß Anspruch 6, wobei die Stoffmengenverhältnisse von Phenol zu α-Methylstyrol im Bereich von 1:3,2 bis 1:8,0 liegen.

8. Modifikatorzusammensetzung gemäß Anspruch 1, **gekennzeichnet durch** eine dynamische Viskosität bei 25 °C im Bereich von 100 bis 2000 mPa·s, einen Gardner-Fariawert von < 4, einen Hydroxylwert von 0,1 bis 7,0 und eine Funktionalität im Bereich von 0,05 bis 1,0.

9. Modifikatorzusammensetzung gemäß Anspruch 8, **gekennzeichnet durch** eine dynamische Viskosität bei 25 °C im Bereich von 100 bis 2000 mPa·s, einen Gardner-Farbwert von < 2, einen Hydroxylwert von 1,5 bis 6,5 und eine Funktionalität von 0,2 bis 0,8.

10. Hochleistungsfähige Beschichtungs- oder Nichtbeschichtungszusammensetzungen, die wenigstens eine der Modifikatorzusammensetzungen gemäß Anspruch 1 bis 9 zusammen mit einem Bindemittel und gegebenenfalls Pigmenten, Füllstoffen und Hilfsstoffen sowie, falls notwendig, kleine Mengen an organischen Lösungsmitteln (weniger als 5 Gew.-%, bezogen auf das Gewicht der vollständigen Zusammensetzung) umfassen.

11. Geformte Artikel, die auf ihrer Oberfläche eine Beschichtungszusammensetzung gemäß Anspruch 10 tragen, in ungehärtetem oder gehärtetem Zustand oder geformte Artikel, die von den Bodenbelag- oder Verbundzusammensetzungen gemäß Anspruch 10 abgeleitet sind, in ungehärtetem oder gehärtetem Zustand.

12. Verfahren zur Herstellung der Modifikatorzusämmensetzüngen gemäß den- - obigen Ansprüchen, umfassend das Mischen von Phenol mit einem organischen Lösungsmittel in einem Gewichtsverhältnis von 30:70 bis 40:60 und einem Säurekatalysator, z.B. einem Lewis-Säure-Katalysator, in einer Menge von 0,01 bis 0,2 Gew.-% bei einer Temperatur von 40 bis 60 °C, dann die langsame und allmähliche Zugabe einer vorbestimmten Menge an Methylstyrol zu der erhaltenen Lösung über einen Zeitraum von 0,25 bis 0,75 Stunden unter kräftigem Rühren, gefolgt von einer zusätzlichen Reaktionszeit von 3 bis 5 Stunden und nach der vollständigen Zugabe einer zusätzlichen Reaktionszeit von 0,25 bis 0,75 Stunden, Neutralisieren und Filtrieren des Reaktionsgemischs und Entfernen des organischen Lösungsmittels durch Destillation.

## Revendications

1. Compositions de modificateur à faible odeur pour des applications de revêtement ou autres, qui ont été dérivées d'une charge pure, comprenant du phénol, de l'a-méthylstyrène et de l'ortho-, méta- ou para-vinyltoluène ou des mélanges de ceux-ci et qui présentent une stabilité au stockage suffisante en combinaison avec une faible viscosité intéressante.

2. Composition de modificateur selon la revendication 1 qui comprend du phénol en une proportion massique de 0,1 à 40 % en masse, de l'a-méthylstyrène en une proportion massique de 30 à 90 % en masse, et du vinyltoluène en une proportion massique de 0,1 à 36 % en masse, où toutes les proportions massiques spécifiées sont relatives à la masse de la composition de modificateur complète et la somme des trois proportions sera toujours 100 %.

3. Composition de modificateur selon la revendication 2 où les proportions massiques de phénol, d'a-méthylstyrène et de vinyltoluène sont dans les plages de 9 à 23 % en masse, de 60 à 80 % en masse et de 1 à 30 % en masse respectivement.

4. Composition de modificateur selon la revendication 1 où les rapports molaires mutuels de phénol et de vinyltoluène sont dans la plage de 1 : 0,20 à 1 : 0,80.

5. Composition de modificateur selon la revendication 4 où les rapports molaires mutuels de phénol et de vinyltoluène sont dans la plage de 1 : 0,28 à 1 : 0,60.

6. Composition de modificateur selon la revendication 1 où les rapports molaires mutuels de phénol et d'a-méthylstyrène sont dans la plage de 1 : 0,50 à 1 : 8,0.

7. Composition de modificateur selon la revendication 6 où les rapports molaires mutuels de phénol et d'a-méthylstyrène sont dans la plage de 1 : 3,2 à 1 : 8,0.

8. Composition de modificateur selon la revendication 1 **caractérisée par** une viscosité dynamique à 25°C-dans la plage de 100 à 2000 mPa.s, un indice de coloration Gardner <4, un indice d'hydroxyle de 0,1 à 7,0 et une fonctionnalité dans la plage de 0,05 à 1,0.

9. Composition de modificateur selon la revendication 8 **caractérisée par** une viscosité dynamique à 25°C dans la plage de 100 à 2000 mPa.s, un indice de coloration Gardner < 2, un indice d'hydroxyle de 1,5 à 6,5 et une fonctionnalité de 0,2 à 0,8.

10. Compositions de revêtement ou autres à hautes performances comprenant au moins l'une des compositions de modificateur des revendications 1-9, en même temps qu'un liant et éventuellement des pigments, des charges et des auxiliaires et si nécessaire de petites quantités de solvants organiques (moins de 5 % en masse, par rapport à la masse de la composition complète).

11. Articles mis en forme portant sur leur surface une composition de revêtement de la revendication 10, à l'état non durci ou durci, ou articles mis en forme dérivés des compositions de revêtement de sol ou composites de la revendication 10, à l'état non durci ou durci.

12. Procédé de production des compositions de modificateur spécifiées précédemment, comprenant le mélange de phénol avec un solvant organique, dans un rapport massique de 30 : 70 à 40 : 60 et un catalyseur acide, par exemple un catalyseur acide de Lewis, en une quantité de 0,01 à 0,2 % en masse, à une température de 40 à 60°C, suivi par une addition lente et progressive d'une quantité prédéterminée de méthylstyrène à la solution obtenue en une durée de 0,25 à 0,75 h sous agitation vigoureuse, suivie par une période de réaction supplémentaire de 3 à 5 h, et après l'addition complète, une durée de réaction supplémentaire de 0,25 à 0,75 h, la neutralisation et la filtration du mélange réactionnel et le retrait du solvant organique par distillation.
